# EUROPEAN PATENT SPECIFICATION

(11) **EP 3 807 543 B1**
(45) Date of publication and mention of the grant of the patent: **13.05.2026**
(21) Application number: 19820345.7
(22) Date of filing: 29.05.2019
(51) Int. Cl.: F16B 13/00, F16B 37/00, F16B 5/04, F16B 19/10, F16B 19/00

(54) **RIVET-LIKE FASTENER AND COMPRESSION SEAL ASSEMBLY**
NIETARTIGE BEFESTIGUNGSVORRICHTUNG UND KOMPRESSIONSDICHTUNGSANORDNUNG
ÉLÉMENT DE FIXATION DE TYPE RIVET ET ENSEMBLE JOINT DE COMPRESSION

(30) Priority: 12.06.2018 US 201862683888 P
(43) Date of publication of application: 21.04.2021
(73) Proprietor: Sherex Fastening Solutions LLC, Tonawanda, NY 14150 (US)
(72) Inventor: KNECHTGES, John, V., Williamsville, NY 14221 (US)
(74) Representative: Goddard, Frances Anna
(86) International application number: PCT/US2019/034419
(87) International publication number: WO 2019/240953

(56) References cited:
- EP-A1- 0 691 480
- EP-B1- 3 556 875
- FR-A1- 2 569 792
- US-A- 2 884 099
- US-A1- 2005 095 078
- US-A1- 2005 201 844
- US-A1- 2005 201 844
- US-A1- 2006 002 784
- US-A1- 2007 258 786
- US-A1- 2018 135 680
- US-B2- 7 223 056

## Description

### TECHNICAL FIELD

The present invention relates generally to the field of fasteners, and more particularly to an improved rivet-like fastener assembly.

### BACKGROUND ART

US Patent No. 7,938,608 is directed to a wall surface protecting bolt supporting apparatus having a plate with an aperture and a sleeve extending from one side of the plate. A plurality of gripping members extend from the plate between the sleeve and the peripheral edge of the plate.

US Patent Application No. 2005/201844 discloses a blind rivet nut with improved grip capability comprising a head portion and a hollow shank portion, with at least one line of weakness that is deformed in use to enhance grip. US Patent No 8,226,339 is directed to a spin resistant threaded insert having a head with an aperture and a hollow body. The underside of the head includes a plurality of radially extending knurls and a portion of the outside surface of the body includes a plurality of axially extending ribs.

### SUMMARY

The present invention provides a rivet-like fastener assembly as set out in the claims. With parenthetical reference to the corresponding parts, portions or surfaces of the disclosed embodiment, merely for purposes of illustration and not by way of limitation, an improved rivet-like fastener assembly (20) is provided that is adapted to be mounted in a hole (12) provided through a wall (15), the wall having a front wall surface (16) and an opposite rear wall surface (18), the fastener assembly comprising: an elongated tubular body (21) orientated about a central axis (x-x) and having a first end (33) and a second end (26); the body having an externally and radially extending head portion (23) adjacent the first end and adapted to engage a portion of the front wall surface about the hole to be axially retained by the front wall surface, and a hollow shank portion (24) extending axially from the head portion and adapted to extend through the hole; the shank portion having an internally threaded section (62) and an intermediate section (61) between the head portion and the internally threaded section; the head portion having a front head surface (33), a rear head surface (29-31), and an outer peripheral edge (32); the head portion having an inner radial section (40) having a first axial thickness (40A) between the front head surface (33) and a first portion (29) of the rear head surface and an outer radial section (41) having a second axial thickness (41A) between the front head surface (33) and a second portion (31) of the rear head surface, the first axial thickness being greater than the second axial thickness; the first portion (29) of the rear head surface adapted to abut a portion of the front wall surface; and an elastomeric seal (22) adapted to be compressed between the second portion (31) of the rear head surface and a portion of the front wall surface.

The intermediate section of the shank comprising a thin-walled section (61) being partially defined between an inwardly-facing cylindrical surface (34) and an outwardly-facing cylindrical surface (28) concentric with the inwardly-facing cylindrical surface such that the thin-walled section has a first radial thickness (61A) between the inwardly-facing and outwardly-facing cylindrical surfaces; and the internally threaded section (62) of the shank being partially defined between an inwardly-facing threaded cylindrical surface (36) and an outwardly-facing cylindrical surface (28) concentric with the inwardly-facing threaded cylindrical surface such that the internally threaded section has a second radial thickness (62A) between the inwardly-facing threaded cylindrical surface and the outwardly-facing cylindrical surface that is greater than the first radial thickness (61A) of the thin-walled section. The thin-walled section of the intermediate section of the shank portion being adapted to be deformed outwardly (65) to engage a portion of the rear wall surface about the hole to be axially retained by the rear wall surface.

The intermediate section of the shank may comprise an outwardly facing cylindrical surface having a plurality of circumferentially-spaced axially and inwardly extending flutes (51). The second end of the elongated tubular body may be closed. The rivet-like fastener assembly comprising a plurality of protrusions (52) extending from the first portion (29) of the rear head surface of the head portion and a section of the shank portion adjacent the head portion, the protrusions adapted to be rotationally retained by the wall. The seal comprising an annular seal adapted to have a compressed axial thickness (22A) and the protrusions may have an axial protrusion length (52A) from the first portion (29) of the rear head surface of the head portion that is greater than the second axial thickness (41A) of the outer radial section (41) of the head portion plus the compressed axial thickness (22A) of the seal (22) less the first axial thickness (40A) of the inner radial section (40) of the head portion.

The front head surface of the head portion may be an annular surface. The first portion and the second portion of the rear head surface of the head portion may be annular surfaces. The head portion comprising an intermediate radial section (42) between the inner radial section and the outer radial section, the intermediate radial section having an intermediate inner frusto-conical surface (30) forming a part of the rear head surface between the first portion of the rear head surface and the second portion of the rear head surface. The seal may comprise an 0-ring having an inner diameter greater than the outer diameter of the inner radial section of the head portion.

### BRIEF DESCRIPTION OF THE DRAWINGS

FIG. 1 is a side elevational view of an improved rivet-like fastener assembly prior to installation.
FIG. 2 is a side elevational view of the fastener body shown in FIG. 1.
FIG. 3 is a longitudinal vertical sectional view of the fastener assembly shown in FIG. 1.
FIG. 4 is an isometric view of the fastener body shown in FIG. 2.
FIG. 5 is an isometric longitudinal vertical sectional view of the fastener assembly shown in FIG. 1 operatively mounted in a wall.
FIG. 6 is side longitudinal vertical sectional view of the improved fastener assembly shown in FIG. 5.

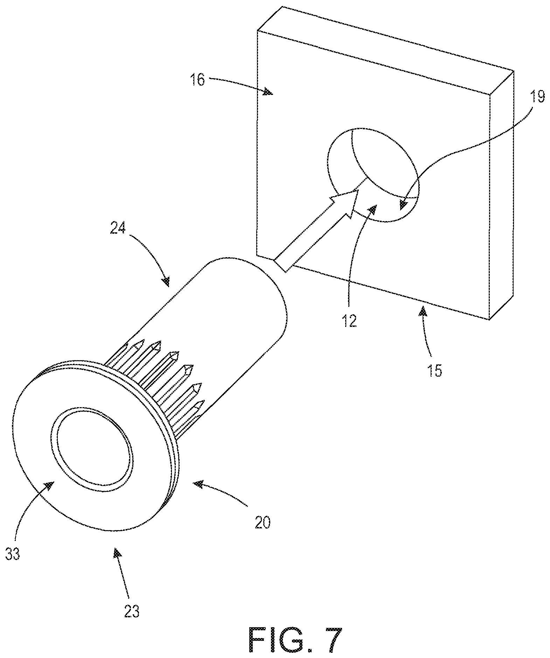

FIG. 7 is an isometric view of the fastener assembly shown in FIG. 1 prior to installation

### DESCRIPTION OF THE EMBODIMENTS

At the outset, it should be clearly understood that like reference numerals are intended to identify the same structural elements, portions or surfaces consistently throughout the several drawing figures, as such elements, portions or surfaces may be further described or explained by the entire written specification, of which this detailed description is an integral part. Unless otherwise indicated, the drawings are intended to be read (e.g., crosshatching, arrangement of parts, proportion, degree, etc.) together with the specification, and are to be considered a portion of the entire written description of this invention. As used in the following description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

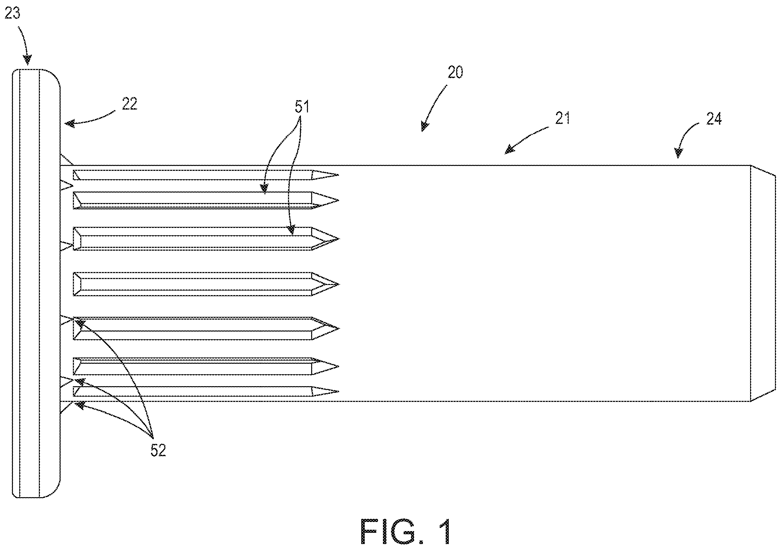

Referring now to the drawings, and more particularly to FIGS. 1-3 thereof, the present invention broadly provides an improved fastener assembly, of which a rivet nut embodiment is generally indicated at 20. Fastener assembly 20 broadly includes rivet nut body 21 and annular seal 22. Rivet nut body 21 is shown as being a horizontally-elongated specially-configured tubular member orientated about central axis x-x and generally comprising leftwardly-facing head portion 23 and rightwardly-extending shank portion 24. In this embodiment, seal 22 comprises an elastomeric 0-ring.

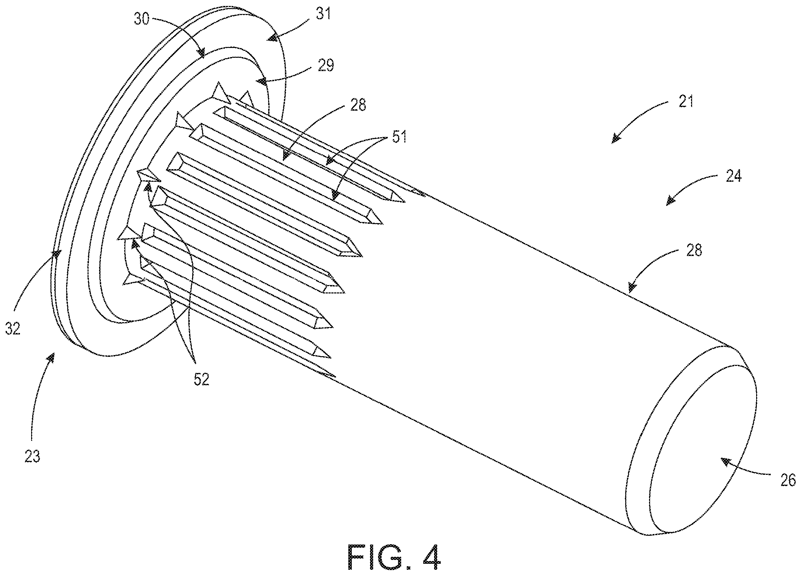

Fastener assembly 20 is adapted to be mounted in a hole 12 provided through representative sheet or wall 15. Wall 15 has forwardly-facing surface 16 and opposite rearwardly-facing surface 18. In FIG. 4, wall 15 is shown as having an inwardly-facing horizontal cylindrical surface 19 defining hole 12.

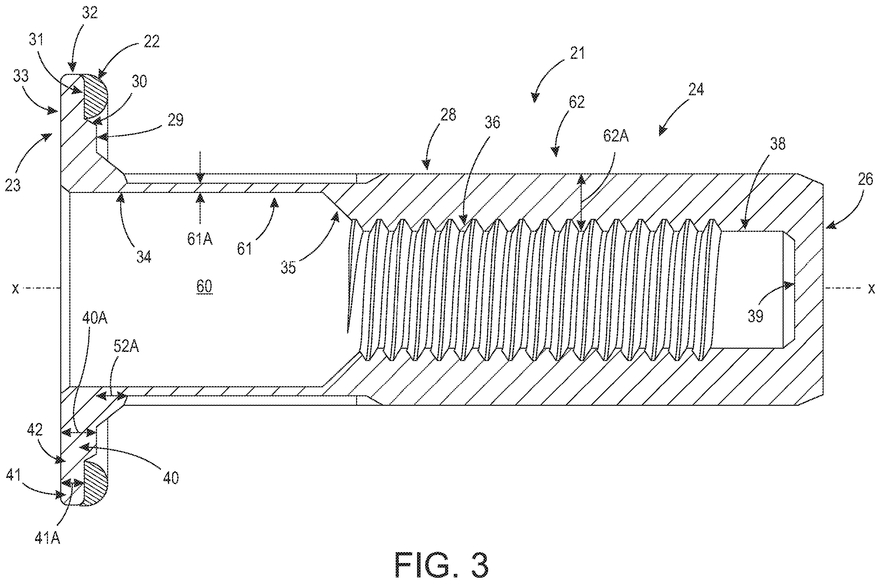

With reference to FIG. 3, rivet nut body 21 is orientated about axis x-x and is generally bounded by rightwardly-facing circular vertical surface 26, outwardly-facing cylindrical horizontal surface 28, rightwardly-facing annular vertical surface 29, rightwardly and outwardly-facing frusto-conical surface 30, rightwardly-facing annular vertical surface 31, outwardly-facing cylindrical horizontal surface 32, leftwardly-facing annular vertical surface 33, inwardly-facing cylindrical horizontal surface 34, leftwardly and inwardly-facing frusto-conical surface 35, inwardly-facing threaded cylindrical horizontal surface 36, inwardly-facing cylindrical horizontal surface 38, and leftwardly-facing circular vertical surface 39.

Surfaces 29, 30, 31, 32 and 33 generally define head portion 23 of body 21 and surfaces 26, 28, 34, 35, 36, 38 and 39 generally define shank portion 24 of body 21. Thus, body 21 is shown as being a horizontally-elongated specially-configured tubular member having leftwardly-facing annular vertical front end 33, rightwardly-facing vertical rear end 26, and inner bore 60 extending axially from front end 33. Head portion 23 is thereby generally an annular flange extending outwardly from outer cylindrical horizontal surface 28 of body 21 adjacent its left end.

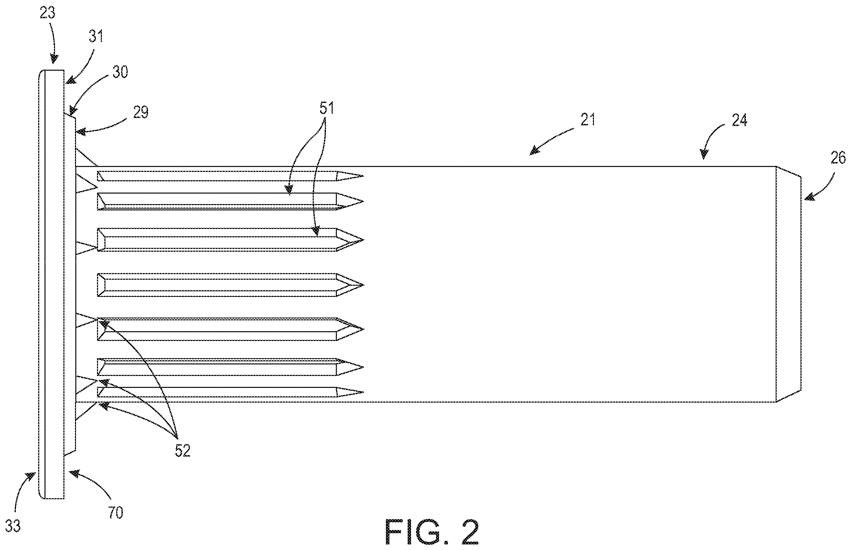

As shown in FIGS 2-6, head portion 23 has an annularly stepped configuration. Inner radial section 40 of head portion 23, defined between the inner annular portion of surface 33 and surface 29, has an axial width 40A. Outer radial section 41 of head portion 23, defined between the outer annular portion of surface 33 and surface 31, has an axial width 41A. Axial width 40A is significantly greater than axial width 41A. Thus, the inner annular surface of head portion 23 steps down from surface 29 to surface 31 via rightwardly and outwardly -facing frusto-conical surface 29. Intermediate radial section 42, between inner radial section 40 and outer radial section 41 and defined between the middle annular portion of surface 33 and surface 30, has an axial width that incrementally decreases from width 40A to width 41A. Thus, surfaces 30 and 31 define outer annular groove 70 in head portion 23 that is configured to receive 0-ring 22.

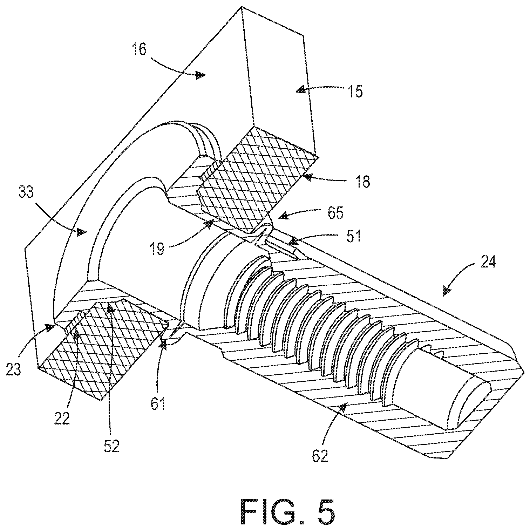

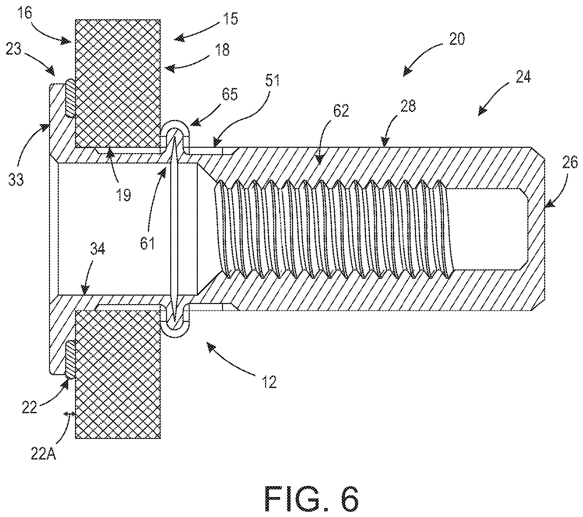

As shown in FIGS. 5 and 6, rightwardly-facing annular vertical surface 29 of head portion 23 is adapted to face toward and abut forwardly-facing wall surface 16 about and immediately adjacent hole 12. Groove 70, formed by rightwardly-facing annular vertical surface 31 and rightwardly and outwardly-facing frusto-conical surface 30 of head portion 23, is adapted to retain the radial position of 0-ring 22 such that the inner diameter of 0-ring 22 is radially positioned and retained outside of the radial extent of protrusions 52 and the outer diameter of annular surface 29. Groove 70 has depth that allows for compression of 0-ring 22 between recessed annular surface 31 and forwardly-facing wall surface 16 about hole 12.

As shown in FIG. 3, shank portion 24 of body 21 has a stepped axial bore 60 that sequentially includes inwardly-facing horizontal cylindrical surface 34 extending rightwardly from left end face 33, leftwardly and inwardly-facing frusto-conical surface 35, inwardly-facing horizontal threaded cylindrical surface 36, inwardly-facing horizontal cylindrical surface 38, and leftwardly-facing vertical abutment surface 39. The threads of surface 36 may vary according to the needs of the desired application and may comprise known thread types, pitch, and geometry. Shank portion 24 comprises unthreaded section 61 and threaded section 62, where the cross section of the metal in unthreaded section 61 is less than that of threaded section 62. Surface 34 thereby defines first axial section 61 of shank 24 and threaded surface 36 defines second axial section 62. First axial section 61, defined between the left cylindrical portion of surface 28 and concentric surface 34, has a radial thickness or width 61A that is greater than the radial thickness or width 62A of second axial section 62, defined between the right cylindrical portion of surface 28 and concentric threaded surface 36. Thus, the diameter of bore 60 decreases from surface 34 to surface 36 via leftwardly and inwardly facing surface 35 while the outside diameter of shank portion 24 remains constant. Accordingly, radial thickness 62A of tubular shank 24 in second section 62 is greater than radial thickness 61A of tubular shank 24 in first section 61, thereby providing a thin-walled section that is more readily deformable as described below and shown in FIGS. 5 and 6. The end of second section 62 may be open or closed depending upon the particular application.

A plurality of circularly-spaced longitudinally extending protrusions, severally indicated at 52, are provided at the interface between head portion 23 and shank portion 24 of rivet nut body 21. Protrusions 52 extend axially to the right from annular surface 29 and radially outward from the left portion of surface 28 adjacent annular surface 29. Thus, protrusions 52 are positioned radially on surface 29 between surface 28 of shank 24 and the outer peripheral edge of annular surface 29. Protrusions 52 are extendable into the wall surface to restrain rotational movement of rivet nut body 21 relative to wall 16. Protrusions 52 creating structural members that imbed into the inside wall surfaces of opening 12, creating greater resistance to spinning of rivet nut body 21. It should be understood that the term "surface" when used with reference to wall 16 may include all exposed surfaces of a wall, including inner surface 19 of opening 12. Although wedge shaped protrusions are shown, other shaped and contoured protrusions may be used as alternatives, including without limitation spikes, knurls and ribs.

A plurality of circularly-spaced longitudinally-extending flutes or grooves, severally indicated at 51, extend into outer surface 28 of shank portion 24 over an intermediate portion of its outer surface 28 adjacent head portion 23. These flutes or grooves 51 tend to prevent body 21 from rotating relative to hole 12 in wall 16, through which fastener body 21 is inserted.

Fastener assembly 20 may be pushed rightwardly through hole 12 in wall 16. Thereafter, a suitable tool (not shown) may engage the threaded portion of rivet nut body 21, and may be pulled leftwardly relative to head 23 so as to cause the intermediate portion of thin-walled body section 61 to deform plastically outwardly to form rivet-like fold 65, which engages rearwardly-facing wall surface 18, as shown in FIG. 6.

Groove 70 extends to the outer perimeter or circumference of head portion 23 and is dimensioned such that groove 70 does not interfere with wedge protrusions 52. Fastener assembly thereby allows for a strong, threaded method of joining thin sheet materials. The polymer material of seal 22 creates a sealing surface between rivet nut body 21 and the material of wall 15 to which rivet nut body 21 is installed. The ring shape and compressed width 22A of seal 22 allows for anti-spin teeth or wedges 52 between head 23 and shank 24 to be exposed and engage the material to which rivet nut body 21 is installed. In addition to protrusions 52 being adapted to be rotationally retained by the wall surface, seal 22 is adapted to have a compressed axial thickness 22A and protrusions 52 have an axial protrusion length 52A from surface 29 of head portion 23 that is greater than second axial thickness 41A of outer radial section 41 of head portion 23 plus compressed axial thickness 22A of seal 22 less first axial thickness 40A of inner radial section 40 of head portion 23 (52A > 41A + 22A - 40A). This assures that protrusions 52 have an axial length that reaches wall 15 when mounted in hole 12. Fastener assembly 20 installs via a compressive force into metallic or non-metallic sheet material 15, which compresses ring seal 22, creating a water-tight seal between rivet nut body 21 and sheet material 15. This allows the rivet nut/sheet material assembly to be sealed without degradation of resistance to spin. In the prior art, the addition of seal material reduced the resistance to spin and eliminated the possible addition and function of anti-spin features to the rivet nut head.

Many changes and modifications may be made. For example, the materials of construction are not deemed to be critical and may be changed or varied. For example, wall 15 may be any metallic or non-metallic material and may be any member, sheet or structure to which other members, sheets or structures may be fastened. The longitudinally-extending flutes or grooves may be employed, omitted, or modified, as desired. For example, the tubular body may have other polygonal shapes and configurations to increase contact with the wall and to increase the frictional resistance of the body to rotate or turn within the hole into, or through, which it has been inserted. Members other than screws, bolts or bolt-like members may also be captured and held within the tubular body.

Therefore, while the presently-preferred form of the improved fastener has been shown and described, and several modifications thereof discussed, persons skilled in this art will readily appreciate that various additional changes and modifications may be made, as defined and differentiated by the following claims.

## Claims

1. A rivet-like fastener assembly (20) adapted to be mounted in a hole (12) provided through a wall (15), said wall having a front wall surface (16) and an opposite rear wall surface (18), said fastener assembly comprising:
an elongated tubular body (21) orientated about a central axis (x-x) and having a first end (33) and a second end (26);
said body having an externally and radially extending head portion (23) adjacent said first end and adapted to engage a portion of said front wall surface about said hole to be axially retained by said front wall surface, and a hollow shank portion (24) extending axially from said head portion and adapted to extend through said hole;
said shank portion having an internally threaded section (62) and an intermediate section (61) between said head portion and said internally threaded section;
said head portion having a front head surface (33), a rear head surface (29-31), and an outer peripheral edge (32);
said head portion having an inner radial section (40) having a first axial thickness (40A) between said front head surface and a first portion (29) of said rear head surface and an outer radial section (41) having a second axial thickness (41A) between said front head surface and a second portion (31) of said rear head surface, said first axial thickness being greater than said second axial thickness;
said first portion (29) of said rear head surface being adapted to abut a portion of said front wall surface;
an elastomeric seal (22), said seal comprising an annular seal adapted to have a compressed axial thickness (22A);
said intermediate section of said shank comprises a thin-walled section (61) being at least partially defined between an inwardly-facing cylindrical surface (34) and an outwardly-facing cylindrical surface (28) concentric with said inwardly-facing cylindrical surface such that said thin-walled section has a first radial thickness (61A) between said inwardly-facing and outwardly-facing cylindrical surfaces;
said thin-walled section (61) of said intermediate section of said shank portion being adapted to be deformed outwardly (65) to engage a portion of said rear wall surface (18) about said hole to be axially retained by said rear wall surface;
said internally threaded section of said shank being at least partially defined between an inwardly-facing threaded cylindrical surface (36) and an outwardly-facing cylindrical surface (28) concentric with said inwardly-facing threaded cylindrical surface such that said internally threaded section has a second radial thickness (62A) between said inwardly-facing threaded cylindrical surface and said outwardly-facing cylindrical surface that is greater than said first radial thickness of said thin-walled section,
**characterized in that**
said head portion further comprises an intermediate radial section (42) between said inner radial section (40) and said outer radial section (41), said intermediate radial section having an intermediate inner frusto-conical surface (30) forming a part of said rear head surface between said first portion (29) of said rear head surface and said second portion (31) of said rear head surface;
said elastomeric seal (22) being adapted to be compressed between said second portion (31) of said rear head surface and a portion of said front wall surface;
and
a plurality of protrusions (52) extending from said first portion (29) of said rear head surface of said head portion and a section of said shank portion adjacent said head portion, said protrusions adapted to be rotationally retained by said wall in use, and
said protrusions (52) have an axial protrusion length (52A) from said first portion (29) of said rear head surface of said head portion that is greater than said second axial thickness (41A) of said outer radial section (41) of said head portion plus said compressed axial thickness (22A) of said seal less said first axial thickness (40A) of said inner radial section (40) of said head portion.

2. The rivet-like fastener assembly set forth in claim 1, wherein said intermediate section of said shank comprises an outwardly facing cylindrical surface having a plurality of circumferentially-spaced axially and inwardly extending flutes (51).

3. The rivet-like fastener assembly set forth in claim 1, wherein said second end of said elongated tubular body is closed.

4. The rivet-like fastener assembly set forth in claim 1, wherein said front head surface of said head portion is an annular surface.

5. The rivet-like fastener assembly set forth in claim 1, wherein said first portion and said second portion of said rear head surface of said head portion are annular surfaces.

6. The rivet-like fastener assembly set forth in claim 1, wherein said seal comprises an 0-ring having an inner diameter greater than an outer diameter of said inner radial section of said head portion.

## Patentansprüche

1. Nietartige Befestigungsbaugruppe (20), die geeignet ist, in einem durch eine Wand (15) bereitgestellten Loch (12) montiert zu sein, wobei die Wand eine vordere Wandoberfläche (16) und eine gegenüberliegende hintere Wandoberfläche (18) aufweist, wobei die Befestigungsbaugruppe Folgendes umfasst:
einen länglichen röhrenförmigen Körper (21), der um eine zentrale Achse (x-x) ausgerichtet ist und ein erstes Ende (33) und ein zweites Ende (26) aufweist;
wobei der Körper einen sich nach außen und radial erstreckenden Kopfabschnitt (23), der mit dem ersten Ende benachbart und geeignet ist, mit einem Abschnitt der vorderen Wandoberfläche um das Loch in Eingriff zu kommen, um axial von der vorderen Wandoberfläche gehalten zu werden, und einen hohlen Schaftabschnitt (24) aufweist, der sich axial von dem Kopfabschnitt erstreckt und geeignet ist, sich durch das Loch zu erstrecken;
wobei der Schaftabschnitt einen Innengewindeteilabschnitt (62) und einen Zwischenteilabschnitt (61) zwischen dem Kopfabschnitt und dem Innengewindeteilabschnitt aufweist;
wobei der Kopfabschnitt eine vordere Kopfoberfläche (33), eine hintere Kopfoberfläche (29-31) und einen äußeren Umfangsrand (32) aufweist;
wobei der Kopfabschnitt einen inneren radialen Teilabschnitt (40), der eine erste axiale Dicke (40A) aufweist, zwischen der vorderen Kopfoberfläche und einem ersten Abschnitt (29) der hinteren Kopfoberfläche und einen äußeren radialen Teilabschnitt (41), der eine zweite axiale Dicke (41A) aufweist, zwischen der vorderen Kopfoberfläche und einem zweiten Abschnitt (31) der hinteren Kopfoberfläche aufweist, wobei die erste axiale Dicke größer als die zweite axiale Dicke ist;
wobei der erste Abschnitt (29) der hinteren Kopfoberfläche geeignet ist, an einem Abschnitt der vorderen Wandoberfläche anzuliegen;
eine elastomere Dichtung (22), wobei die Dichtung eine ringförmige Dichtung umfasst, die geeignet ist, eine komprimierte axiale Dicke (22A) aufzuweisen;
der Zwischenteilabschnitt des Schaftes einen dünnwandigen Teilabschnitt (61) umfasst, der mindestens teilweise zwischen einer nach innen gerichteten zylindrischen Oberfläche (34) und einer nach außen gerichteten zylindrischen Oberfläche (28) definiert ist, die derart konzentrisch zu der nach innen gerichteten zylindrischen Oberfläche ist, dass der dünnwandige Teilabschnitt eine erste radiale Dicke (61A) zwischen der nach innen gerichteten und der nach außen gerichteten zylindrischen Oberfläche aufweist;
wobei der dünnwandige Teilabschnitt (61) des Zwischenteilabschnitts des Schaftabschnitts geeignet ist, nach außen (65) verformt zu sein, um mit einem Abschnitt der hinteren Wandoberfläche (18) um das Loch in Eingriff zu kommen und axial von der hinteren Wandoberfläche gehalten zu werden;
wobei der Innengewindeteilabschnitt des Schafts mindestens teilweise zwischen einer nach innen gerichteten zylindrischen Gewindeoberfläche (36) und einer nach außen gerichteten zylindrischen Oberfläche (28) definiert ist, die derart konzentrisch zu der nach innen gerichteten zylindrischen Gewindeoberfläche ist, dass der Innengewindeteilabschnitt eine zweite radiale Dicke (62A) zwischen der nach innen gerichteten zylindrischen Gewindeoberfläche und der nach außen gerichteten zylindrischen Oberfläche aufweist, die größer als die erste radiale Dicke des dünnwandigen Teilabschnitts ist,
**dadurch gekennzeichnet, dass**
der Kopfabschnitt ferner einen radialen Zwischenteilabschnitt (42) zwischen dem inneren radialen Teilabschnitt (40) und dem äußeren radialen Teilabschnitt (41) umfasst, wobei der radiale Zwischenteilabschnitt eine innere kegelstumpfförmige Zwischenoberfläche (30) aufweist, die einen Teil der hinteren Kopfoberfläche zwischen dem ersten Abschnitt (29) der hinteren Kopfoberfläche und dem zweiten Abschnitt (31) der hinteren Kopfoberfläche ausbildet;
wobei die elastomere Dichtung (22) geeignet ist, zwischen dem zweiten Abschnitt (31) der hinteren Kopfoberfläche und einem Abschnitt der vorderen Wandoberfläche zusammengedrückt zu werden;
und
eine Vielzahl von Vorsprüngen (52), die sich von dem ersten Abschnitt (29) der hinteren Kopfoberfläche des Kopfabschnitts und einem mit dem Kopfabschnitt benachbarten Teilabschnitt des Schaftabschnitts erstrecken, wobei die Vorsprünge geeignet sind, im Gebrauch von der Wand drehbar gehalten zu werden, und
die Vorsprünge (52) eine axiale Vorsprungslänge (52A) von dem ersten Abschnitt (29) der hinteren Kopfoberfläche des Kopfabschnitts aufweisen, die größer als die zweite axiale Dicke (41A) des äußeren radialen Teilabschnitts (41) des Kopfabschnitts zuzüglich der komprimierten axialen Dicke (22A) der Dichtung abzüglich der ersten axialen Dicke (40A) des inneren radialen Teilabschnitts (40) des Kopfabschnitts ist.

2. Nietartige Befestigungsbaugruppe nach Anspruch 1, wobei der Zwischenteilabschnitt des Schaftes eine nach außen gerichtete zylindrische Oberfläche, die eine Vielzahl von in Umfangsrichtung beabstandeten, sich axial und nach innen erstreckenden Nuten (51) aufweist, aufweist.

3. Nietartige Befestigungsbaugruppe nach Anspruch 1, wobei das zweite Ende des länglichen röhrenförmigen Körpers geschlossen ist.

4. Nietartige Befestigungsbaugruppe nach Anspruch 1, wobei die vordere Kopfoberfläche des Kopfabschnitts eine ringförmige Oberfläche ist.

5. Nietartige Befestigungsbaugruppe nach Anspruch 1, wobei der erste und der zweite Abschnitt der hinteren Kopfoberfläche des Kopfabschnitts ringförmige Oberflächen sind.

6. Nietartige Befestigungsbaugruppe nach Anspruch 1, wobei die Dichtung einen 0-Ring umfasst, der einen Innendurchmesser aufweist, der größer als ein Außendurchmesser des inneren radialen Teilabschnitts des Kopfabschnitts ist.

## Revendications

1. Ensemble d'éléments de fixation de type rivets (20) conçu pour être monté dans un trou (12) ménagé à travers une paroi (15), ladite paroi ayant une surface de paroi avant (16) et une surface de paroi arrière opposée (18), ledit ensemble d'éléments de fixation comprenant :
un corps tubulaire allongé (21) orienté autour d'un axe central (x-x) et ayant une première extrémité (33) et une seconde extrémité (26) ;
ledit corps ayant une partie tête (23) s'étendant extérieurement et radialement, adjacente à ladite première extrémité et conçue pour venir en prise avec une partie de ladite surface de paroi avant autour dudit trou pour être retenue axialement par ladite surface de paroi avant, et une partie tige creuse (24) s'étendant axialement à partir de ladite partie tête et conçue pour s'étendre à travers ledit trou ;
ladite partie tige ayant une section filetée intérieurement (62) et une section intermédiaire (61) entre ladite partie tête et ladite section filetée intérieurement ;
ladite partie tête ayant une surface de tête avant (33), une surface de tête arrière (29-31) et un bord périphérique extérieur (32) ;
ladite partie tête ayant une section radiale intérieure (40) ayant une première épaisseur axiale (40A) entre ladite surface de tête avant et une première partie (29) de ladite surface de tête arrière et une section radiale extérieure (41) ayant une seconde épaisseur axiale (41A) entre ladite surface de tête avant et une seconde partie (31) de ladite surface de tête arrière, ladite première épaisseur axiale étant supérieure à ladite seconde épaisseur axiale ;
ladite première partie (29) de ladite surface de tête arrière étant conçue pour venir en butée contre une partie de ladite surface de paroi avant ;
un joint élastomère (22), ledit joint comprenant un joint annulaire conçu pour avoir une épaisseur axiale comprimée (22A) ;
ladite section intermédiaire de ladite tige comprend une section à paroi mince (61) qui est au moins en partie définie entre une surface cylindrique orientée vers l'intérieur (34) et une surface cylindrique orientée vers l'extérieur (28) concentrique avec ladite surface cylindrique orientée vers l'intérieur, de sorte que ladite section à paroi mince a une première épaisseur radiale (61A) entre lesdites surfaces cylindriques orientées vers l'intérieur et vers l'extérieur ;
ladite section à paroi mince (61) de ladite section intermédiaire de ladite partie tige étant conçue pour être déformée vers l'extérieur (65) afin de venir en prise avec une partie de ladite surface de paroi arrière (18) autour dudit trou pour être retenue axialement par ladite surface de paroi arrière ;
ladite section filetée intérieurement de ladite tige étant au moins en partie définie entre une surface cylindrique filetée orientée vers l'intérieur (36) et une surface cylindrique orientée vers l'extérieur (28) concentrique avec ladite surface cylindrique filetée orientée vers l'intérieur, de sorte que ladite section filetée intérieurement a une seconde épaisseur radiale (62A) entre ladite surface cylindrique filetée orientée vers l'intérieur et ladite surface cylindrique orientée vers l'extérieur qui est supérieure à ladite première épaisseur radiale de ladite section à paroi mince,
**caractérisé en ce que**
ladite partie tête comprend en outre une section radiale intermédiaire (42) entre ladite section radiale intérieure (40) et ladite section radiale extérieure (41), ladite section radiale intermédiaire ayant une surface tronconique intérieure intermédiaire (30) formant une partie de ladite surface de tête arrière entre ladite première partie (29) de ladite surface de tête arrière et ladite seconde partie (31) de ladite surface de tête arrière ;
ledit joint élastomère (22) étant conçu pour être comprimé entre ladite seconde partie (31) de ladite surface de tête arrière et une partie de ladite surface de paroi avant ;
et
une pluralité de protubérances (52) s'étendant de ladite première partie (29) de ladite surface de tête arrière de ladite partie tête et d'une section de ladite partie tige adjacente à ladite partie tête, lesdites protubérances étant conçues pour être retenues en rotation par ladite paroi lors de l'utilisation, et
lesdites protubérances (52) ont une longueur de protubérance axiale (52A) à partir de ladite première partie (29) de ladite surface de tête arrière de ladite partie tête qui est supérieure à ladite seconde épaisseur axiale (41A) de ladite section radiale extérieure (41) de ladite partie tête plus ladite épaisseur axiale comprimée (22A) dudit joint moins ladite première épaisseur axiale (40A) de ladite section radiale intérieure (40) de ladite partie tête.

2. Ensemble d'éléments de fixation de type rivets selon la revendication 1, dans lequel ladite section intermédiaire de ladite tige comprend une surface cylindrique orientée vers l'extérieur comportant une pluralité de cannelures s'étendant intérieurement et axialement et espacées circonférentiellement (51).

3. Ensemble d'éléments de fixation de type rivets selon la revendication 1, dans lequel ladite seconde extrémité dudit corps tubulaire allongé est fermée.

4. Ensemble d'éléments de fixation de type rivets selon la revendication 1, dans lequel ladite surface de tête avant de ladite partie tête est une surface annulaire.

5. Ensemble d'éléments de fixation de type rivets selon la revendication 1, dans lequel ladite première partie et ladite seconde partie de ladite surface de tête arrière de ladite partie tête sont des surfaces annulaires.

6. Ensemble d'éléments de fixation de type rivets selon la revendication 1, dans lequel ledit joint comprend un joint torique ayant un diamètre intérieur supérieur au diamètre extérieur de ladite section radiale intérieure de ladite partie tête.
